# EUROPEAN PATENT APPLICATION

(11) **EP 1 533 691 A1**
(43) Date of publication of application: **25.05.2005**
(21) Application number: 03791436.3
(22) Date of filing: 29.08.2003
(51) Int. Cl.: G06F 3/12, B41J 29/38

(54) **MONITORING PRINTER VIA NETWORK**

(30) Priority: 30.08.2002 JP 2002254212
(71) Applicant: SEIKO EPSON CORPORATION, Shinjuku-ku, Tokyo 163-0811 (JP)
(72) Inventor: HANAOKA, Masaaki SEIKO EPSON CORPORATION, Suwa-shi, Nagano 392-8502 (JP)
(74) Representative: Winter, Brandl, Fürniss, Hübner, Röss, Kaiser, Polte Partnerschaft Patent- und Rechtsanwaltskanzlei
(86) International application number: PCT/JP2003/011128
(87) International publication number: WO 2004/021165

(57) **Abstract**

Amounts of expendables consumed by a printer are sensed accurately. A job control unit 106 transfers a print job queued in job buffer 107 to a spooler 105, in page units. Spooler 105 sends the print job to a printer PT, as well as providing a completion determination unit 103 with notification of start of printing. Upon receiving notification of start of printing, the completion determination unit monitors the status of the printer PT and remaining data in the spooler 105, and in the event that printer PT status is "ready to print" and there is no remaining data in the spooler 105, decides that printing has completed, and counts the number of sheets of paper. An ink amount measurement unit 104, by means of predetermined correcting means, corrects the amount of ink consumed during printing, so as to approximate the amount of ink actually used in printing. A server SV is notified of the number of sheets of paper and the corrected amount of ink consumed, whereupon the server performs a billing process.

## Description

### TECHNICAL FIELD

The present invention relates to a technique for monitoring a printer via a network, and more particularly to a technique for monitoring the status of expendable supplies for a printer, and/or service status of the printer.

### BACKGROUND ART

To date, there has been proposed a business model in which a printer is loaned to a user, whose is then charged according to consumed amounts of expendable supplies such as ink and printer paper. In the context of such a business, it has also been proposed to remotely monitor consumption of expendables via a network.

Exemplary methods for identifying amount of ink consumed include mathematical calculation, and monitoring with sensors. With the former approach, the amount of ink ejected in drops by the print head, and the amount of ink suctioned out during maintenance processes, are added up by a software application, to arrive at calculated ink consumption. For the latter, a method wherein two electrodes are provided for monitoring liquid level is known.

The number of pages is counted at the point in time that a print job is sent from the spooler to the printer, at which point printing of the print job is deemed finished.

However, methods involving mathematical calculation of amount of ink consumed have the drawback that undeniable error can occur between calculated values and actual ink consumption, due to differences in pressure within ink cartridges or in ink viscosity due to differences in factors such as service environment (e.g. humidity and temperature levels in the service area), elapsed time since the ink cartridge was first unsealed, or frequency of use at the user site. Another drawback is the high cost entailed in providing each ink cartridge with a sensor able to continuously measure ink consumption.

Another problem pertaining to counting pages is that even if an error should occur after transfer of the print job to the printer, the system will nevertheless decide that printing has been finished, and will accordingly include in the paper count those pages which could not print, designating this count be the number of sheets of paper actually consumed.

In other words, in the prior art, error is present in the estimated amounts of expendables consumed by the printer. A similar problem arises whenever consumption status of expendables is monitored over a network.

With the foregoing in view, it is an object of the present invention to provide accurate sensing of amounts of expendables consumed by a printer.

### DISCLOSURE OF THE INVENTION

The present invention in a first aspect thereof provides a monitoring device for monitoring a printer, comprising: a measurement unit for measuring amount of an expendable consumed during execution of printing by the printer; a correction unit that, by means of sensing consumed amount of the expendable using a method different from the measurement, corrects error occurring in the measurement result; and a notification unit for notifying another network-connected device of information relating to the consumed amount reflecting the correction.

The amount of an expendable consumed is calculated and monitored by the minute during execution of printing. However, depending on the service environment of the printer, there may be discrepancy between estimated consumed amount of an expendable, and the actual consumed amount. The correction unit performs a process to correct this discrepancy, so as to approximate actual consumed amount used by a user.

"Method different from the measurement" herein can be carried out at predetermined timing established on the basis of remaining amount of the expendable product, the number of print operations, or the like, by a method wherein the remaining amount or status of the expendable is sensed by means of a sensor or the like. In preferred practice, sensor accuracy will be higher than that of measurements made by the measurement unit. Using sensor values, measurements made by the measurement unit can be corrected. Examples of predetermined timing herein include when a measurement indicating that half of the expendable remains is calculated, or when a predetermined number of print operations have taken place.

The notification unit affords notification of amount consumed, this amount reflecting the aforementioned correction. Notification may contain, for example, information identifying a printer, information identifying a user, or the like as appropriate. Information identifying a printer could consist, for example, of the printer's MAC address or, where connected on a network, the IP address it uses, or the like. Information identifying a user consists, for example, of a user ID, IP address of the client used by the user, or the like.

The predetermined information provided by the notification enables "another network-connected device" to quickly perform calculations of usage charges, replenish expendables, and so on.

According to this first aspect, by correcting error in measurements according to predetermined timing, accuracy of measurement of consumption of an expendable can be improved, even without the use of a sensor able to continuously monitor consumption.

The invention in a second aspect thereof provides a monitoring device for monitoring a printer, comprising: a completion determination unit for determining completion of printing; a measurement unit for calculating amount consumed of an expendable as relates to printing determined to have reached the completion, and a notification unit for notifying another network-connected device of predetermined information relating to the consumed amount.

Here, expendables may include paper or OHP transparency film used during printing, for example. The completion determination unit monitors the printer, and decides whether actual completion of printing has taken place. "Actual completion of printing" herein refers to a print job ultimately outputting paper or other medium. The measurement unit counts the number of pages of a print medium determined to have completed printing.

By so doing, even in the event that, for example, the printer experiences an error after a print job has been issued, causing printing to halt in mid-operation, it is nevertheless possible to measure consumed amount for the actually printed portion of the job, and thus to improve the accuracy of sensing of consumed amount.

The present invention in a third aspect thereof provides a monitoring device for monitoring a printer, wherein the printer is a device that performs printing by ejecting ink stored in an ink receptacle. The monitoring device comprises a measurement unit for measuring the amount of ink ejected by the printer during the printing; a correction unit that, by means of sensing the consumption state of the ink amount by a method different from the measurement, corrects error occurring in the measurement result; and a notification unit for notifying another network-connected device of information relating to the ink amount reflecting the correction.

The measurement unit measures the amount of ink by adding up, by means of a software application, the ink drop count ejected by the ink head of the ink cartridge, and the amount of ink suctioned out during maintenance processes.

As the method for sensing the amount of ink consumed, there may be employed, for example, a technique of producing sympathetic vibration within the ink cartridge by charging and discharging a piezoelectric element neighboring the ink cartridge, sensing the remaining amount of ink from differences in resonance frequency produced by the sympathetic vibration (technique disclosed in JP2001-147146A). On the basis of remaining amount of ink sensed by this method, the correction unit performs correction of the ink use amount measured by the measurement unit.

By so doing, errors in estimated ink consumption due to service environment can be corrected, making possible measurement with high accuracy.

The invention in a fourth aspect thereof provides a monitoring device for monitoring a printer, comprising a completion determination unit for determining completion of printing; a measurement unit for calculating at least one parameter selected from number of pages of paper used in the printing determined to have been completed, and amount of information of print data used in the printing determined to have been completed; and a notification unit for notifying another network-connected device of predetermined information relating to the result of the measurement.

By so doing, it is possible to measure, with a high degree of accuracy, the amount of information or number of pages for which printing has actually completed, so that when performing billing or the like, billing will accurately reflect actual number of pages printed or amount of information.

In a monitoring device according to the fourth aspect, there may be employed an arrangement wherein the completion determination unit comprises a status acquisition unit for acquiring operating status of a printer and print data remaining in the corresponding spooler; wherein in the event that no remaining data is present in the spooler and the operating status of the printer is "ready to print", a determination is made that printing has completed.

If there is no remaining print data in the spooler, acquisition of "ready" status by the status acquisition unit can be assumed to indicate that printing is over. By means of this arrangement, completion of printing of print data can be determined in a reliable manner, improving the accuracy of detection of completion of printing.

In a monitoring device according to the fourth aspect, there may be employed an arrangement wherein the print data is in predetermined format outputtable in page units; and the completion determination unit determines print outcome of the print data in page units.

This predetermined format may be the PDF (registered trademark) format, for example. Print outcome herein includes success or failure to print the page, as well as, for example, detailed information such as number of pages done printing, number of pages failing to print, and so on. With this arrangement, print outcome can be monitored closely in individual page units, making it possible to determine completion of printing with greater accuracy.

The invention in a fifth aspect thereof provides a monitoring device for monitoring a printer, wherein the printer is a device that performs printing by ejecting ink stored in an ink receptacle. The monitoring device comprises a measurement unit for measuring the amount of ink ejected by the printer during the printing; a correction unit that, by means of sensing the consumption state of the ink amount by a method different from the measurement, corrects error occurring in the measurement result; a completion determination unit for determining completion of printing; a completion information measurement unit for calculating at least one parameter selected from number of pages of paper determined to have been completed, and amount of information of print data of the portion determined to have been completed; and a notification unit for notifying another network-connected device of information relating to the ink amount reflecting the correction, and to outcome measured by the completion information measurement unit.

This aspect of the invention is equivalent to a combination of the third and fourth aspects of the invention. In this way, the various elements of the invention may be combined as appropriate.

In a monitoring device according to any of the first to fifth aspects, the notification unit may additionally provide notification of billing information identifying a payer to be billed on the basis of the contents of the notification.

Billing information may include, for example, user information, bank account number, or other information. By means of this arrangement, the payer may be identified quickly when billing for consumed amounts of expendables and for the amount of printed information, whereby it is possible to improve transaction efficiency.

A monitoring device according to any of the first to fifth aspects may further comprise a calculation unit for calculating a service fee on the basis of the consumed amount, the number of sheets of paper, and the amount of information; wherein the notification unit provides notification of the service fee.

With this arrangement, the amount of information sent by way of notification to another device can be reduced, so that the load on the network can be lessened. Additionally, since a user can verify charges immediately after completion of printing, convenience may be improved.

In this embodiment, expendables are not limited to ink, and may take any of various other forms, such as toner, a drum, or the like. In cases where quantitative calculation is difficult, it is possible, for example, to determine degradation in quality on the basis of number of times used. As regards expendables measurement of which is triggered by completion of printing, these are not limited only to paper or OHP transparency film, and naturally can include any kind of printable medium.

The invention may also be constituted on the basis of a transaction model wherein consumption of expendables (such as ink) used by a user, as well as amounts of printed documents and of printed information, are monitored, with notification being provided to an administration server connected via a network, so that that the user may be billed accurately, or so that notification of time to replace an expendable may be provided, or an expendable delivered.

Besides the monitoring device arrangements described above, the invention in another aspect thereof may take the form of a method for monitoring a printer. Other possible embodiments thereof could include: a computer program for realizing the above; a recorded medium having such a program recorded thereon; or a data signal containing such a program and embodied in a carrier wave. The additional elements noted above may be employed in any of these embodiments.

Where the invention is embodied as a computer program or recorded medium having such a program recorded thereon, it may constitute the entirety of the program for driving the monitoring device, or only those portions for realizing the functions of the invention. Recorded media may include a flexible disk, CD-ROM, DVD-ROM, magnetooptical disk, IC card, ROM cartridge, punch card, printed matter imprinted with symbols such as a bar code, a computer internal storage device (RAM, ROM or other memory) or external storage device, or other computer-readable medium.

### BRIEF DESCRIPTION OF THE DRAWINGS

FIG. 1 is a simplified illustration of a monitoring system in a first embodiment;
FIG. 2 is an illustration of the inside of the monitoring system in the first embodiment;
FIG. 3 is flowchart of a billing information notification process in the first embodiment;
FIG. 4 is flowchart of a sheet count sensing process in the first embodiment;
FIG. 5 is flowchart of a used ink amount measuring process in the first embodiment;
FIG. 6 is flowchart of a process for acquiring amount of information of print data having completed printing in a second embodiment; and
FIG. 7 is flowchart of a charge calculation process in a third embodiment.

### BEST MODE FOR CARRYING OUT THE INVENTION

The preferred embodiments of the invention are described hereinbelow according to the following outline.

### A. Embodiment 1

A1: System Overview
A2: Internal Arrangement
A3: Billing Information Notification Process
A4: Sheet Count Sensing Process
A5: Ink Amount Measuring Process

### B. Embodiment 2

B1: Information Amount Sensing Process

### C. Embodiment 3

C1: Charge Calculation Process

### D. Variations

### A1: System Overview

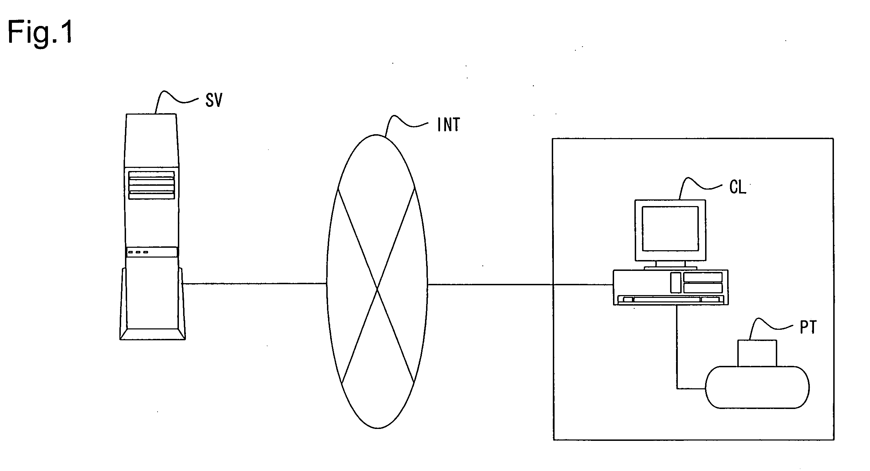

FIG. 1 is a simplified illustration of a monitoring system by way of a first embodiment. As shown in the drawing, an ink jet printer PT has a local connection to a client computer CL; the client computer CL connected to a central server SV (hereinafter "server SV") via the Internet INT. A monitoring system is set up for the client computer CL. In this embodiment, the user is charged according to amounts of expendables consumed by printer PT.

Client computer CL queues a print job onto the spooler corresponding to the printer PT. When the queued print job has been arranged in print order, it is sent to the printer PT, which commences printing. Client computer CL performs monitoring of completion of printing of the print job, measurement of the amount of ink used by printer PT, and acquisition of the number of sheets of printer paper. This information is transmitted via the Internet INT to the server SV, which administers billing information. On the basis of information received by the server SV, a process to calculate the charges and request payment from the user is performed. Request for payment can be carried out in any of various ways based on user information preregistered in the server SV, for example, sending an invoice to a registered address, or debiting the amount from a registered bank account.

Since the client computer CL has been set up as the monitoring system for monitoring printer PT, hereinafter the client computer CL will be referred to as monitoring system 1000. In this embodiment, print jobs take the form of PDF files, which allow determination of completed printing to be made in page units, with determination of completed printing being made on a page unit basis.

### A2: Internal Arrangement

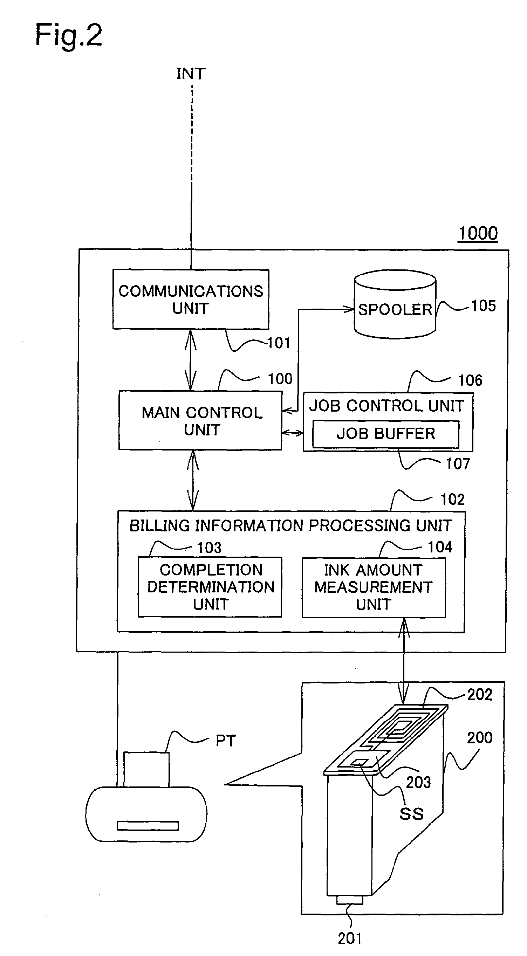

FIG. 2 is an illustration of the inside of the monitoring system 1000 in this embodiment. Monitoring system 1000 comprises a main control unit 100, a communications unit 101, a billing information processing unit 102, a completion determination unit 103, an ink amount measurement unit 104, a spooler 105, a job control unit 106, and a job buffer 107. These functional blocks can be set up in client computer CL by installing software for realizing these functions, and controlled by main control unit 100. Alternatively, the functional blocks may be constituted by hardware.

Main control unit 100 performs operational control of the functional blocks of monitoring system 1000. Control herein includes control of communication of information with the outside via the network, acquisition of operating status of connected printer PT and of consumption status of expendables during printing by printer PT, and so on.

Job control unit 106 monitors job buffer 107 at predetermined intervals, and sends the job, in the order in which it was input to the job buffer 107, to the spooler 105. Spooler 105 transfers the received job in order to the printer PT.

Once spooler 105 has commenced sending a job to the printer PT, the completion determination unit 103 outputs a print start notification. The completion determination unit 103 constitutes part of the billing information processing unit 102, and administers information relating to the printer PT. Information relating to the printer PT includes the model and status of printer PT. It may also include various other kinds of information, such as printable paper size. Once the completion determination unit 103 acquires a print start notification, the status of the printer PT is checked, along with whether any job data remains in the spooler 105, and on the basis of the outcome of this check a determination is made as to whether printing has finished.

The ink amount measurement unit 104 measures the amount of ink used in the course of printing, from the ink consumption amount and remaining ink amount acquired through communication with the cartridge 200 of printer PT. Ink consumption amount refers to the amount of ink calculated during printing; remaining ink amount refers to the remaining amount detected by the sensor.

A simplified illustration of cartridge 200 is included in Fig. 2. At the lower end of cartridge 200 is disposed an ink supply orifice 201 for supplying ink to the print head of printer PT; at the upper end are disposed an antenna 202 for communicating with printer PT, and a logic circuit 203 that includes a sensor SS for sensing remaining ink amount. In this embodiment, sensor SS is a piezoelectric element.

Following is a description of the method for measuring amount of ink consumed. By means of software, the ink amount measurement unit 104 adds up the amount of ink ejected from ink supply orifice 201, and the amount of ink suctioned out during maintenance of the print head, to arrive at the amount of ink consumed. This method of measurement will be referred to as Method A; remaining ink amount derived from amount of ink consumed, acquired by means of Method A, will be referred to as remaining ink amount A. In this embodiment, amount of ink consumed is calculated by the minute during printing, and stored in memory in logic circuit 203; however, it could be stored in the monitoring system 1000 instead.

Following is a description of the method for measuring remaining ink amount. Using electromagnetic waves received from printer PT, cartridge 200 applies voltage to the piezoelectric element of sensor SS. This application of voltage causes the piezoelectric element of sensor SS to vibrate, producing an elastic wave in the ink. Remaining ink amount can be sensed on the basis of the reflected wave created when this elastic wave reflects off the surface of the ink, and the back electromotive force created in the piezoelectric element by composite vibration of residual vibration of the piezoelectric element. This method of measurement will be referred to as Method B; remaining ink amount measured by means of Method B will be referred to as remaining ink amount B. Method B does not involve quantitative detection of remaining ink amount B; rather, it senses whether a predetermined site, determined with reference to the installation location of sensor SS, is below the surface level of the ink. In this embodiment, the sensor SS is situated a location enabling it to detect whether half or less of the ink remains. In this embodiment, remaining ink amount B is stored in memory in logic circuit 203; however, it could instead be stored in memory provided to the monitoring system 1000.

By sending a predetermined control signal to the cartridge, the ink amount measurement unit 104 acquires consumed ink amount and remaining ink amount B. Remaining ink amount A and remaining ink amount B are compared, and if there is a discrepancy, consumed ink amount is corrected and handed over to the billing information processing unit 102.

On the basis of information received from the completion determination unit 103 and the ink amount measurement unit 104, the billing information processing unit 102 generates notification information for notification to the server SV. Notification information includes consumed amounts of expendables, acquired in each functional block, and a user ID for identifying the user. For example, information for an account to be debited, the printer MAC address, or other such information useable by the server SV in requesting payment can be used instead of, or in addition to, a user ID.

The communications unit 101 exchanges data with other devices through the Internet INT. Communications unit 101 sends the notification information created by the billing information processing unit 102 to the server SV via the Internet INT.

By means of the device arrangement described hereinabove, the monitoring system 1000 of this embodiment acquires the true number of sheets for which printing has finished, as well as ink use amount actually used in printing, and notifies the server SV of same, so that the user can be billed accurately. Following is a description of the process for acquiring amounts of expendables consumed by printer PT and notifying of billing information, in the event that a print job has been issued to the printer PT.

### A3: Billing Information Notification Process

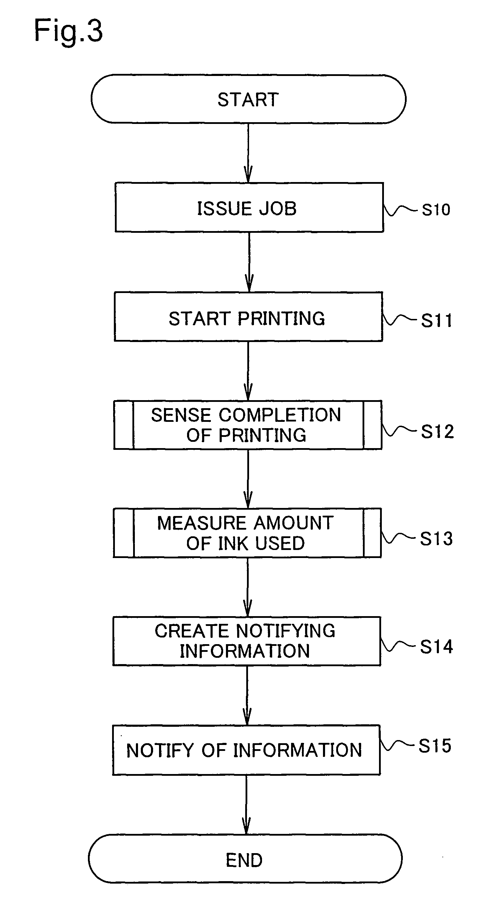

FIG. 3 is flowchart of a billing information notification process in this embodiment. When client CL issues a print job to printer PT (Step S10), the print job is spooled in page units onto the spooler 105, and then sent in order to the printer PT to commence printing (Step S11). Once printing begins, the monitoring system 1000 monitors the operational status of the printer PT and remaining data in the spooler 105, to detect completion of printing (Step S12), as well as measuring the amount of ink used (Step S13).

Once printing is finished, monitoring system 1000, on the basis of the measured amount of ink used, generates information for notifying the server SV (Step S14), and sends it to the server SV (Step S15).

On the basis of the information received from the monitoring system 1000, the server SV calculates the charges, and requests the user for payment.

### A4: Sheet Count Sensing Process

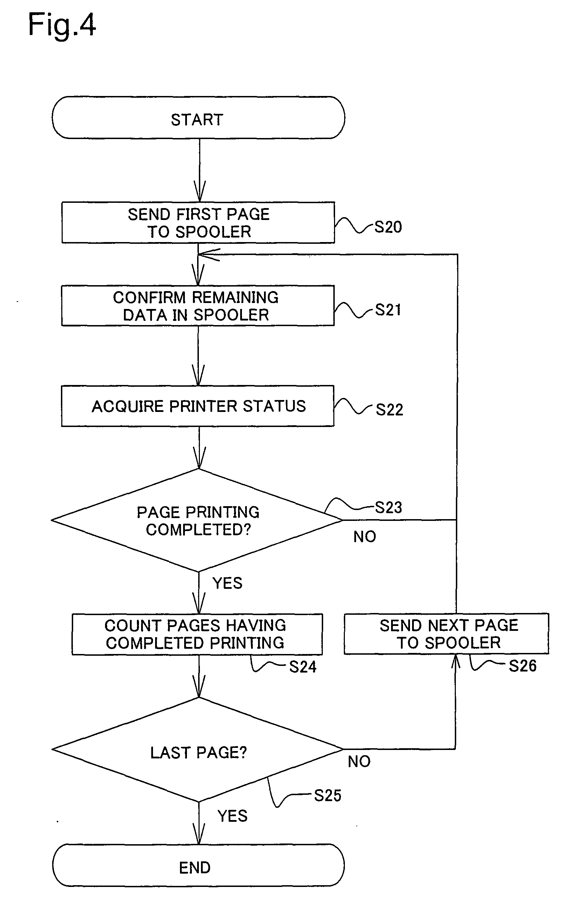

FIG. 4 is flowchart of a sheet count sensing process in the embodiment. This is a process wherein, on the basis of information acquired from the printer PT and spooler 105, the monitoring system 1000 determines the printing has finished, and then counts the number of sheets of paper. This process is initiated by transfer of a print job held in job buffer 107 to the spooler 105, in page units.

The monitoring system 1000 opens the PDF file of the first job held in job buffer 107, and sends the first page to the spooler 105 (Step S20). Once printing commences, the monitoring system 1000 verifies at predetermined time intervals whether any print data is remaining in the spooler (Step S21), as well as acquiring the status of the printer PT (Step S22).

Next, on the basis of the status of the printer PT and the remaining data in the spooler 105, the monitoring system 1000 determines if printing has finished (Step S23). If the status is "ready to print," and there is no remaining data present in the spooler 105, the monitoring system 1000 decides that printing has finished, and adds up the number of page printed (Step S24). If page printing is not yet finished, the process of Steps S21 -S23 is repeated.

The monitoring system 1000 next makes a decision as to whether the printed page is the final page (Step S25), and if it is the final page, determines the number of pages printed, and terminates the process. If it is not the final page, in Step S105, the next page is input, and the process beginning at Step S21 is repeated (Step S26).

### A5: Ink Amount Measuring Process

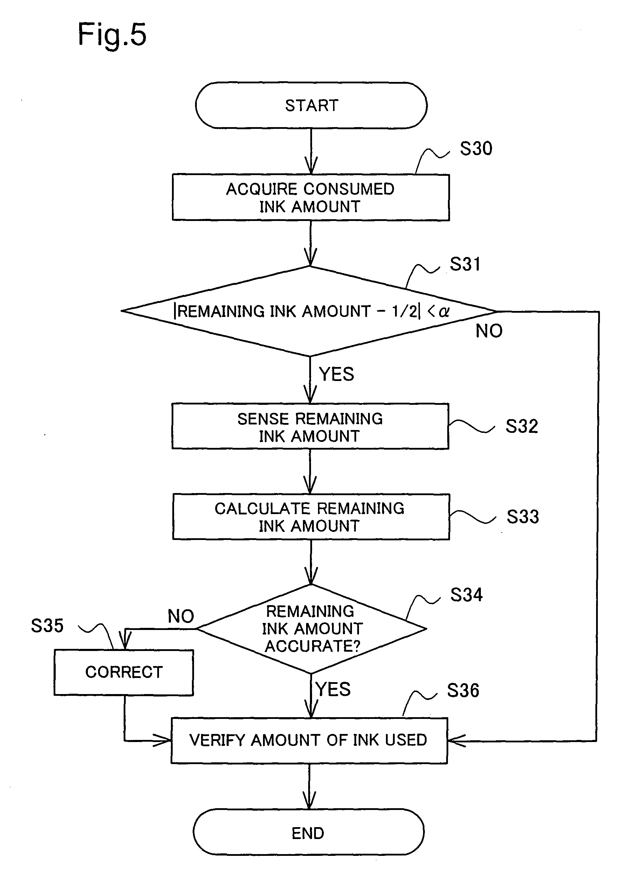

FIG. 5 is flowchart of a used ink amount measuring process in the embodiment. The process commences after printing of the last page of a print job has been completed.

First, the monitoring system 100 acquires the amount of ink consumed, as measured using Method A (Step S30). Next, using remaining ink amount A calculated on the basis of this amount of ink consumed, a decision is made as to whether the condition "| remaining ink amount - 1/2| < α" (Step S31). In the embodiment, this value α is arbitrary.

In the event that remaining ink amount A meets the condition "|remaining ink amount - 1/2| < α", monitoring system 1000 senses remaining ink amount B using method B (Step S32). Remaining ink amount A and remaining ink amount B are then compared, and a decision is made as to whether remaining ink amount A is correct, that is, whether the difference between the two amounts is within a predetermined permissible range (Step S34). In the event that remaining ink amount A has been found to have error and be incorrect, remaining ink amount A is corrected to the value of remaining ink amount B; the amount of ink consumed is corrected as well (Step S35). The monitoring system 1000 deems this corrected result to be the amount of ink used by the user, and terminates the measuring process (Step S36).

In Step S31, if remaining ink amount A does not meets the condition "| remaining ink amount - 1/2| < α", the amount of ink consumed acquired in Step S30 is deemed to be the amount of ink actually used by the user, whereupon the measuring process terminates (Step S36).

In Step S34, in the event of a decision that remaining ink amount A is correct, the amount of ink consumed acquired in Step S30 is deemed to be the amount of ink actually used by the user, whereupon the measuring process terminates (Step S36).

According to this embodiment, completion of printing of a print job can be ascertained in detail in page units. Additionally, error in ink amount calculated using Method A can be corrected at the point in time that half of the ink has been consumed, and it becomes possible to accurately measure the amount of ink used in printing. By so doing, even if error should occur, the amount of ink that would have been consumed in printing pages that failed to print can be omitted, without having to count the number of pages that failed to print, so that the user can be accurately charged fro the number of sheets of paper printed and the amount of ink used.

### B. Embodiment 2

In Embodiment 1, there was shown an example wherein billing is performed through notifying the server SV of consumed amounts of two expendables, namely, the number of sheets of paper having completed printing, and the amount of ink used. In Embodiment 2, billing is performed by notifying the server of the amount of information of print data having completed printing, for example, the number of bytes. In this embodiment, system design is the same as in Embodiment 1, and print jobs take the form of PDF files that allow completion of printing to be determined in page units.

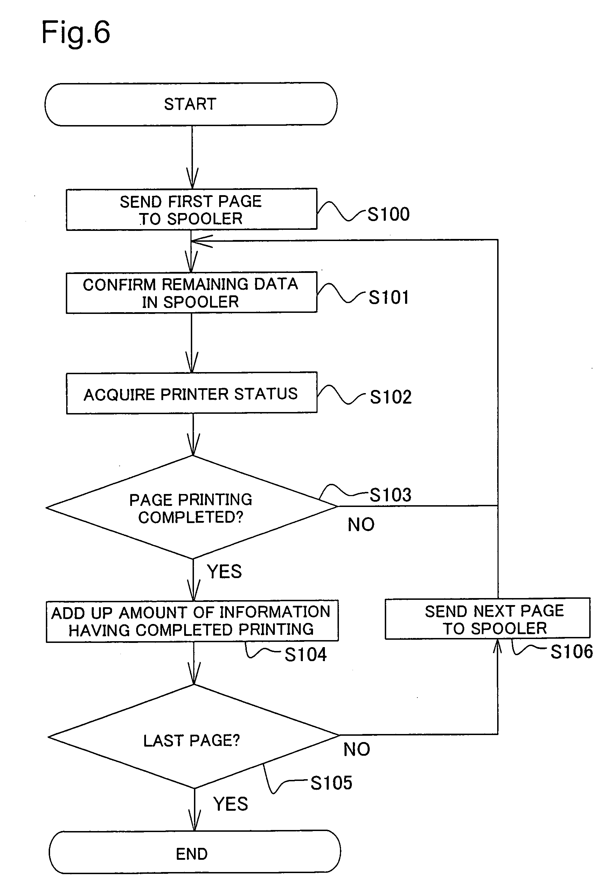

FIG. 6 is flowchart of a process for acquiring amount of information of print data having completed printing in a second embodiment. The processes of Step S100 -Step S103 are similar to the processes of Step S20 -Step S23 of Embodiment 1, and need not be described here.

In Step S103, in the event it is decided that printing of a page has completed, the monitoring system adds up the amount of information for the page that has completed printing (Step S104), and then makes a decision as to whether this page is the final page (Step S105). If it is the final page, the amount of information printed is verified, and the process terminates. If it is not the final page, the next page is sent the spooler 105, returning to Step S101 and looping the process (Step S106).

According to this embodiment, billing of a user can be performed by notifying the server SV of the amount of information of print data having completed printing. By so doing, it becomes possible to assess the same charge where, for example, print data for an amount of information that would fit onto a single page prints out onto two pages, due to layout. Also, when printing print data that contains a large amount of information, since the printer will inevitably be occupied for an extended period, the charges levied may take into consideration the duration the printer is so occupied.

### C. Embodiment 3

### C1: Charge Calculation Process

In Embodiment 1 and Embodiment 2, billing calculations are performed by the server SV, on the basis of information provided by notification from the monitoring system 1000. In Embodiment 3, billing calculations are performed by the monitoring system 1000, which then notifies the server SV of the calculated charges. The system overview in this embodiment is similar to that in Embodiment 1 and Embodiment 2. However, the billing information processing unit 102 performs the billing calculations on the basis of information received from the completion determination unit 103 and ink amount measurement unit 104.

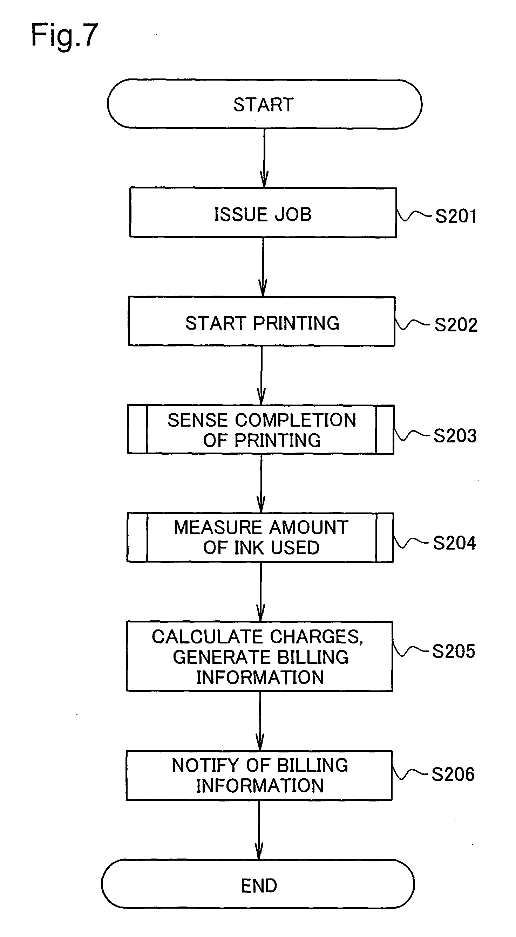

FIG. 7 is flowchart of a charge calculation process in Embodiment 3. The client CL initiates the process at the point in time that a print job is issued. The processes of Step S201 -Step S204 are similar to the process of Step S10 -Step S13 of Embodiment 1, and need not be described here.

On the basis of information received from the completion determination unit 103 and ink amount measurement unit 104, the billing information processing unit 102 calculates the charges and creates billing information for notification to the server SV (Step S205). The billing information includes the calculated charges and a user ID identifying the user. For example, account information for the account to be debited, the MAC address of the printer, or some other information enabling the server to make request for payment could be used instead of a user ID, or in addition to a user ID.

Via the communications unit 101, the billing information processing unit 102 notifies the server SV of the created billing information (Step S206). Using the billing information received from the monitoring system 1000, the server SV requests the user for payment.

By so doing, the user can verify the charges immediately after completion of printing, so that convenience is improved. Also, since the amount of information sent by way of notification the server SV can be reduced, the load on the network can be lessened, and since billing calculations need not be made on the server, the load on the server may be reduced as well.

In Embodiments 1 -3, the information acquired by the monitoring system 1000 was used for billing purposes, but is not limited thereto. The invention is applicable also to various other processes such as ascertaining consumption status of expendables, notification of time to replace expendables, delivery of expendables, and so on. Expendables herein are not limited to ink, and may take any of a number of other forms such as toner, drums, or the like. For expendables for which quantitative calculation is difficult, it is possible, for example, to determine degradation in quality on the basis of number of times used. As regards expendables measurement of which is triggered by completion of printing, these are not limited only to paper or OHP transparency film, but may be any of various printable media.

In Embodiment 2, completion of printing is determined in page units, but could instead be determined in job units.

While the invention has been shown and described hereinabove through certain preferred embodiments, it is not limited thereto and may assume any of various other arrangements without departing from the scope and spirit thereof. For example, the above control functions could be realized through software, or through hardware.

### D. Variations

### D1. Variation 1:

In Embodiments 1 -3, the printer PT receives print jobs from the client computer CL, but this arrangement is not limiting. The printer PT could instead be connected to a network, and receive print jobs from various computers on the same network. In this case, it is preferable for the printer PT to have installed therein a control unit composed of a microcomputer comprising a CPU, RAM and ROM or other memory, so that the monitoring system may be implemented within the printer. By so doing, the load on the client computer CL can be reduced.

### D2. Variation 2:

In Embodiments 1 -3, processes relating to billing are performed by the server, but this arrangement is not limiting. Instead, print jobs could be issued from the server SV, which would function as a job issuing device for executing printing. Alternatively, a print job could be issued to the server SV from a mobile terminal such as a cell phone, with printing being performed by the printer PT under the control of the server SV. By means of this arrangement, even if printing is carried out from a remote location, amounts of expendables consumed by printer PT may nevertheless be measured efficiently.

### D3. Variation 3:

In Embodiments 1 -3, the monitoring system 1000 is implemented on the client computer CL, but this arrangement is not limiting. Instead, the monitoring system 1000 could be implemented on the server SV, and consumed amounts of expendables monitored via the Internet INT. By means of this arrangement, the load on the client computer CL and the printer PT can be reduced, and processing efficiency improved.

### D4. Variation 4:

In Embodiments 1 -3, consumed amounts of expendables are transmitted to the server SV via the Internet INT; however, these may instead be employed in an arrangement whereby consumed amounts of expendables are monitored within a LAN (local area network). Since the present invention is not limited to billing purposes, implementation thereof for the purpose of overall monitoring of consumed amounts of expendables by printers in a LAN, and notifying of time to replace or reorder expendables, for example, is also possible.

According to the monitoring system of the present invention, amounts of expendables consumed by a printer can be measured accurately, and billing for consumed amounts, administration of expendables, or other functions carried out efficiently.

### INDUSTRIAL APPLICABILITY

The present invention may be utilized for monitoring the status of printer expendables and printer service conditions, via a network.

## Claims

1. A monitoring device for monitoring status of expendables for a printer connected to a network, the device comprising:
a measurement unit for measuring amount of an expendable consumed during execution of printing by the printer;
a correction unit that, by means of sensing consumed amount of the expendable using a method different from the measurement, corrects error occurring in the measurement result; and
a notification unit for notifying another network-connected device of information relating to the consumed amount reflecting the correction.

2. A monitoring device for monitoring status of expendables for a printer connected to a network, the device comprising:
a completion determination unit for determining completion of printing;
a measurement unit for calculating amount consumed of an expendable as relates to printing determined to have reached the completion; and
a notification unit for notifying another the network-connected device of predetermined information relating to the consumed amount.

3. A monitoring device for monitoring status of expendables for a printer connected to a network, wherein
the printer is a device that performs printing by ejecting ink stored in an ink receptacle, and the monitoring device comprises:
a measurement unit for measuring amount of ink ejected by the printer during the printing;
a correction unit that, by means of sensing consumption state of the ink amount by a method different from the measurement, corrects error occurring in the measurement result; and
a notification unit for notifying another network-connected device of information relating to the ink amount reflecting the correction.

4. A monitoring device for monitoring status of expendables for a printer connected to a network, the device comprising:
a completion determination unit for determining completion of printing;
a measurement unit for calculating at least one parameter selected from number of sheets of paper used in the printing determined to have been completed, and amount of information of print data used in the printing determined to have been completed; and
a notification unit for notifying another network-connected device of predetermined information relating to the result of the measurement.

5. A monitoring device according to Claim 4 wherein
the completion determination unit comprises a status acquisition unit for acquiring operating status of the printer and print data remaining in a corresponding spooler;
wherein in the event that no remaining data is present in the spooler and the operating status of the printer is ready to print, a determination is made that printing has completed.

6. A monitoring device according to Claim 5 wherein
the print data is in predetermined format outputtable in page units; and
the completion determination unit determines the print completion of the print data in page units.

7. A monitoring device for monitoring status of expendables for a printer connected to a network, wherein
the printer is a device that performs printing by ejecting ink stored in an ink receptacle, and the monitoring device comprises:
a measurement unit for measuring amount of ink ejected by the printer during the printing;
a correction unit that, by means of sensing the consumption state of the ink amount by a method different from the measurement, corrects error occurring in the measurement result;
a completion determination unit for determining completion of printing;
a completion information measurement unit for calculating at least one parameter selected from number of sheets of paper used in the printing determined to have been completed, and amount of information of print data used in the printing determined to have been completed; and
a notification unit for notifying another network-connected device of predetermined information relating to at least one parameter selected from the ink amount reflecting the correction, the number of sheets of paper, and the amount of information.

8. A monitoring device according to any of Claims 1 to 7 wherein the notification unit additionally provides notification of billing information that identifies a payer to be billed based on contents of the notification.

9. A monitoring device according to any of Claims 1 to 7, further comprising a calculation unit for calculating a service fee based on the consumed amount, the number of sheets of paper, and the amount of information;
wherein the notification unit provides notification of the service fee.

10. A monitoring method for monitoring status of expendables for a printer connected to a network, the method comprising the steps of:
measuring amount of an expendable consumed during execution of printing by the printer;
by means of sensing consumption status of the expendable using a method different from the measurement, correcting error occurring in the measurement result; and
notifying another the network-connected device of information relating to the consumed amount reflecting the correction.

11. A monitoring method for monitoring status of expendables for a printer connected to a network, the method comprising the steps of
determining completion of printing;
calculating amount consumed of an expendable as relates to the printing determined to have reached the completion, and
notifying another the network-connected device of predetermined information relating to the consumed amount.

12. A recording medium having recorded thereon a computer program for causing a computer to monitor status of expendables for a printer connected to a network, the medium having recorded thereon a computer program for causing a computer to perform the functions of:
measuring amount of an expendable consumed during execution of printing by the printer;
by means of sensing consumption status of the expendable using a method different from the measurement, correcting error occurring in the measurement result; and
notifying another network-connected device of information relating to the consumed amount reflecting the correction.

13. A recording medium having recorded thereon a computer program for causing a computer to monitor status of expendables for a printer connected to a network, the medium having recorded thereon a computer program for causing a computer to perform the functions of:
determining completion of printing;
calculating amount consumed of an expendable as relates to the printing determined to have reached the completion, and
notifying another the network-connected device of predetermined information relating to the consumed amount.
